# FASCICULE DE BREVET EUROPEEN

(11) **EP 3 063 435 B1**
(45) Date de publication et mention de la délivrance du brevet: **23.08.2017**
(21) Numéro de dépôt: 14786229.6
(22) Date de dépôt: 22.09.2014
(51) Int. Cl.: F16H 63/30, F16H 63/34, F16H 63/20

(54) **BOÎTE DE VITESSES MANUELLE DE VÉHICULE, À LOQUET DE CONTRÔLE DU FREIN DE MARCHE ARRIÈRE**
HANDSCHALTGETRIEBE EINES FAHRZEUGS MIT EINER KLINKE ZUR STEUERUNG DER RÜCKWÄRTSGANGBREMSE
VEHICLE MANUAL GEARBOX, WITH A CATCH FOR CONTROLLING THE REVERSE-GEAR BRAKE

(30) Priorité: 28.10.2013 FR 1360486
(43) Date de publication de la demande: 07.09.2016
(73) Titulaire: Peugeot Citroën Automobiles SA, 78140 Vélizy-Villacoublay (FR)
(72) Inventeur: MATIAS, Carlos, F-95100 Argenteuil (FR)
(74) Mandataire: Rosenberg, Muriel Sylvie
(86) Numéro de dépôt international: PCT/FR2014/052347
(87) Numéro de publication internationale: WO 2015/063383

(56) Documents cités:
- EP-A1- 0 745 790
- EP-A1- 1 022 495
- JP-A- S61 171 961

## Description

L'invention concerne les boîtes de vitesses manuelles à marche arrière non synchronisée qui équipent certains véhicules, éventuellement de type automobile.

Comme le sait l'homme de l'art une boîte de vitesses du type précité comprend généralement :
- des arbres primaire et secondaire munis de pignons fixes et fous (de marche avant et de marche arrière) destinés à définir des rapports (ou vitesses),
- un actionneur de marche arrière chargé de déplacer un pignon baladeur de marche arrière pour l'engrener avec des pignons de marche arrière des arbres primaire et secondaire,
- des fourchettes munies d'une crosse et propres à être translatées pour actionner des synchroniseurs à friction qui sont associés aux pignons fous,
- un levier de passage muni d'une clé d'interverrouillage comportant un doigt de passage chargé d'agir sur les crosses pour provoquer la translation sélective de l'une de leurs fourchettes, et
- un ensemble de freinage qui est chargé, lorsque l'une des fourchettes associées à un rapport de marche avant est translatée, d'induire une friction du synchroniseur du pignon fou de ce dernier rapport pour agir sur la vitesse des pignons de marche arrière (et plus précisément les freiner) afin de permettre l'engagement de la marche arrière par le doigt de passage.

Afin de déclencher la friction du synchroniseur précité, la boîte de vitesses comprend un mécanisme de commande interne comportant un doigt de commande intégré dans la clé d'interverrouillage et chargé de translater la crosse de la fourchette associée à ce synchroniseur entre une position de repos et une position active. Lorsque la friction est terminée cette fourchette revient dans sa position de repos, et la poursuite de l'entraînement en rotation du levier de passage, qui est couplé en translation au levier de sélection, provoque l'entraînement en rotation du doigt de passage, ce qui contraint l'actionneur de marche arrière à déplacer un pignon baladeur de marche arrière qui est monté à translation sur l'arbre de marche arrière. Ce déplacement provoque son engrènement avec des pignons de marche arrière des arbres primaire et secondaire et donc l'engagement de la marche arrière.

Pour que le doigt de commande du mécanisme de commande interne puisse agir correctement sur la crosse de la fourchette précitée, et notamment qu'il puisse se dégager (ou s'échapper) naturellement de cette crosse pour permettre son retour dans sa position de repos, il doit être incliné sensiblement à 45° par rapport à la direction de translation de cette fourchette, ce qui s'avère encombrant et donc interdit son utilisation dans certaines boîtes de vitesses compactes (ou de faible encombrement transversal). Par ailleurs, cet agencement s'avère incompatible avec certaines boîtes de vitesses très récentes dans lesquelles le sens d'engagement de la marche arrière est inversé.

On connait le document de brevet EP-A-0 745 790 divulguant le préambule de la revendication 1.

On connait également le document de brevet EP-A-1 022 495 divulguant une boîte de vitesses automobile.

L'invention a donc notamment pour but d'améliorer la situation.

Elle propose notamment à cet effet une boîte de vitesses manuelle, destinée à équiper un véhicule et comprenant des arbres primaire et secondaire munis de pignons définissant des rapports, des fourchettes munies d'une crosse et propres à être translatées pour actionner des synchroniseurs à friction associés à certains des pignons, un levier de passage muni d'une clé d'interverrouillage comportant un doigt de passage propre à agir sur les crosses pour provoquer une translation sélective de l'une des fourchettes, et un ensemble de freinage propre, en cas de translation d'une fourchette d'un rapport de marche avant, à induire une friction du synchroniseur associé à ce dernier rapport pour agir sur la vitesse de pignons de marche arrière.

Cette boîte de vitesses se caractérise par le fait :
- que l'une de ses fourchettes comprend un loquet monté à rotation et muni d'un logement terminé par une butée, et
- que son levier de passage comprend également, dans la clé d'interverrouillage, un doigt de commande comprenant des première et seconde parties et propre à être logé dans ce logement lorsqu'il est translaté pendant une phase de sélection d'une marche arrière, puis, lorsqu'il est entraîné en rotation, à pousser cette butée avec sa première partie pour translater sa fourchette entre une position de repos et une position active propre à faire fonctionner l'ensemble de freinage, tout en entraînant en rotation le loquet, par appui de la seconde partie sur une face interne du logement, pour dégager sa première partie de la butée afin de permettre un retour de sa fourchette vers sa position de repos en vue d'un engagement effectif de la marche arrière par le doigt de passage.

Grâce à ce loquet, on peut désormais utiliser un doigt de commande de faible encombrement qui peut se dégager ou s'échapper de façon forcée sous un angle bien supérieur à 45° par rapport à la direction de translation de la fourchette.

La boîte de vitesses selon l'invention peut comporter d'autres caractéristiques qui peuvent être prises séparément ou en combinaison, et notamment :
- avant d'être entraînée en rotation, la première partie du doigt de commande peut être placée sensiblement perpendiculairement à la direction de translation de la fourchette qui comporte le loquet ;
- la première partie du doigt de commande peut comprendre une face avant propre à pousser une face interne de la butée, et une face arrière chanfreinée et propre à agir sur une face externe de la butée pour provoquer une translation de sa fourchette entre une position intermédiaire et sa position de repos consécutivement à l'engagement effectif de la marche arrière par le doigt de passage ;
- le logement peut être délimité par une paroi comportant une première sous-partie sensiblement plane, une deuxième sous-partie inclinée, prolongeant sa première sous-partie et propre à permettre un entraînement en rotation progressif et contrôlé du loquet par la seconde partie du doigt de commande, et une troisième sous-partie sensiblement plane, prolongeant sa deuxième sous-partie et se terminant au niveau de la butée ;
- la seconde partie du doigt de commande peut comprendre une première sous-partie solidarisée sensiblement perpendiculairement à la première partie et une seconde sous-partie solidarisée sensiblement perpendiculairement à cette première sous-partie ;
- elle peut comprendre des moyens de rappel élastique couplés au loquet et à la fourchette qui comprend ce loquet, et agencés pour replacer automatiquement ce dernier dans une position d'attente (ou de repos) lorsque le doigt de commande n'agit plus sur lui ;
- le loquet peut être monté à rotation sur une fourchette qui est associée à des cinquième et sixième rapports ;
- son doigt de commande peut faire partie intégrante d'une pièce comprenant son doigt de passage.

L'invention propose également un véhicule, éventuellement de type automobile, et comprenant une boîte de vitesses manuelle du type de celle présentée ci-avant.

D'autres caractéristiques et avantages de l'invention apparaîtront à l'examen de la description détaillée ci-après, et des dessins annexés (obtenus en CAO/DAO, d'où le caractère apparemment discontinu de certaines lignes), sur lesquels:
- les figures 1 et 2 illustrent schématiquement, dans des vues en perspective différentes, un exemple de réalisation d'une partie d'une boîte de vitesses manuelle selon l'invention,
- la figure 3 illustre schématiquement, dans une vue de côté, une partie de la boîte de vitesses des figures 1 et 2,
- la figure 4 illustre schématiquement, dans une vue de côté, une partie des éléments de la boîte de vitesses des figures 1 à 3, et notamment la troisième fourchette avec son loquet placé dans une position de repos et le doigt de commande placé dans le logement du loquet au début d'une phase de sélection de la marche arrière,
- la figure 5 illustre schématiquement, dans une vue de côté, un gros plan d'une partie centrale de la figure 4 comprenant le loquet et le doigt de commande,
- la figure 6 illustre schématiquement, dans une vue de côté, un gros plan d'une partie centrale de la figure 4 comprenant le loquet et le doigt de commande juste avant l'échappement de ce dernier à la fin de la phase de sélection de la marche arrière,
- la figure 7 illustre schématiquement, dans une vue de côté, un gros plan d'une partie centrale de la figure 4 comprenant le loquet et le doigt de commande juste après l'engagement de la marche arrière par le doigt de passage, et
- la figure 8 illustre schématiquement, dans une vue de côté, un gros plan d'une partie centrale de la figure 4 comprenant le loquet et le doigt de commande au début de la phase de retour du levier de passage dans sa position initiale.

L'invention a notamment pour but de proposer une boîte de vitesses BV manuelle et à marche arrière non synchronisée, et destinée à équiper un véhicule.

Dans ce qui suit, on considère, à titre d'exemple non limitatif, que le véhicule est de type automobile. Il s'agit par exemple d'une voiture. Mais l'invention n'est pas limitée à ce type de véhicule. Elle concerne en effet tout type de véhicule terrestre ou maritime (ou fluvial).

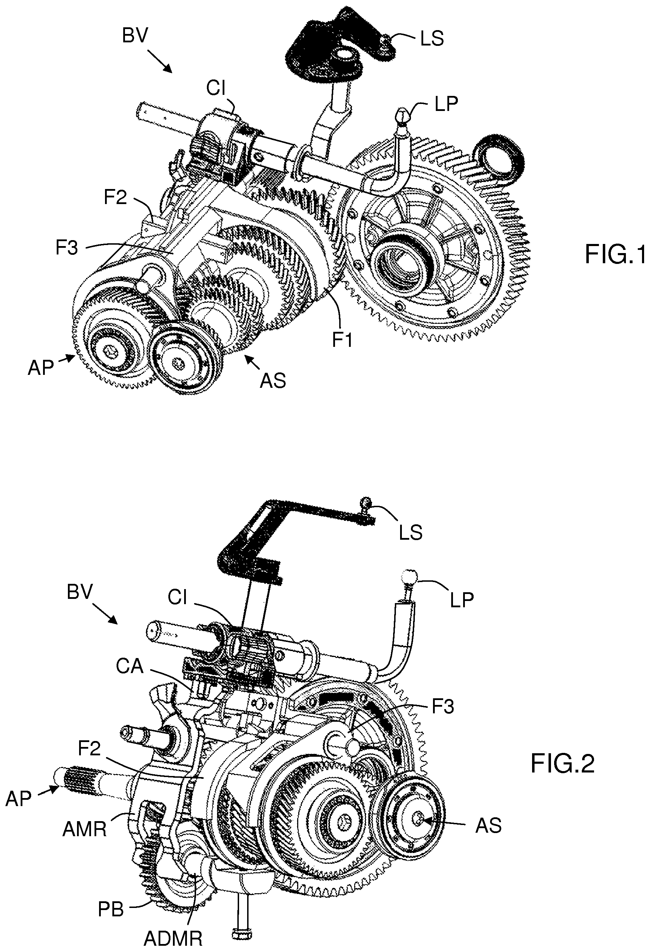

On a schématiquement représenté sur les figures 1 à 3 une partie d'une boîte de vitesses BV de type manuel et à marche arrière non synchronisée, et destinée à être couplée à un moteur thermique et/ou un moteur électrique d'un véhicule via un embrayage.

Bien que cela apparaisse de façon partielle sur la figure 1, la boîte de vitesses BV comprend classiquement et notamment au moins un arbre primaire AP, un arbre secondaire AS, un arbre de marche arrière ADMR, un levier de sélection couplé à un levier de passage de rapport (ou vitesse) LP, des fourchettes de commande Fj, un actionneur de marche arrière AMR, des synchroniseurs à friction, une clé d'interverrouillage CI et un ensemble de freinage.

L'arbre primaire AP constitue l'entrée de la boîte de vitesses BV. Il est destiné à recevoir le couple moteur via l'embrayage et comprend plusieurs pignons fixes et fous, de marche avant et de marche arrière, destinés à participer à la définition des rapports (ou vitesses) sélectionnables de la boîte de vitesses BV.

L'arbre secondaire AS constitue la sortie de la boîte de vitesses BV. Il est destiné à recevoir le couple moteur via l'arbre primaire AP afin de le communiquer à l'arbre de transmission auquel il est couplé, et comprend à cet effet plusieurs pignons fixes et fous, de marche avant et de marche arrière, destinés à engrener certains pignons de l'arbre primaire AP afin de participer à la définition des différents rapports (ou vitesses) sélectionnables de la boîte de vitesses BV.

Comme illustré sur la figure 2, l'actionneur (ou basculeur) de marche arrière AMR est chargé de déplacer un pignon baladeur de marche arrière PB qui est monté à translation sur l'arbre de marche arrière ADMR pour l'engrener avec des pignons de marche arrière des arbres primaire AP et secondaire AS. Il est actionné par le doigt de passage DP, décrit plus loin.

On notera que le gros pignon qui est situé le plus à droite sur les figures 1 à 3 est une couronne de différentiel chargée de réaliser la démultiplication finale entre l'arbre secondaire AS et la transmission, qui vient se loger en son centre.

Chaque fourchette Fj est munie d'une crosse Cj et est propre à être translatée par un doigt de passage DP installé dans la clé d'interverrouillage CI pour actionner un synchroniseur à friction qui lui est associé et qui est également associé à des pignons fous dédiés à au moins un rapport. Dans l'exemple illustré, où la boîte de vitesses BV comprend six rapports de marche avant et un rapport de marche arrière, on utilise trois fourchettes F1 à F3 (j = 1 à 3). La première fourchette F1 est dédiée aux premier et deuxième rapports, la deuxième fourchette F2 est dédiée aux troisième et quatrième rapports, et la troisième fourchette F3 est dédiée aux cinquième et sixième rapports. Mais la boîte de vitesses BV pourrait comprendre plus de trois fourchettes ou bien moins de trois fourchettes.

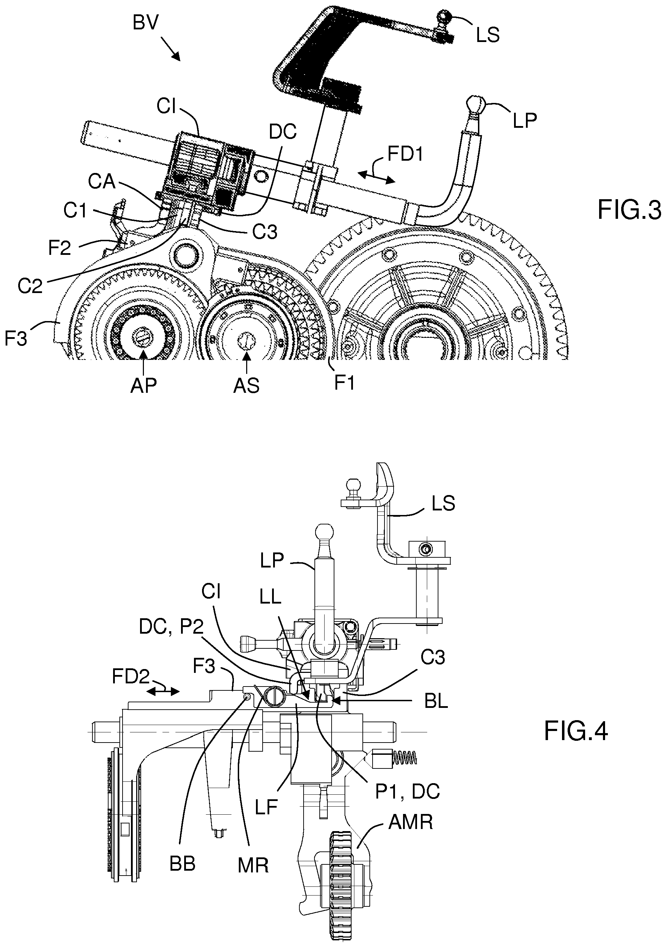

La clé d'interverrouillage CI est solidarisée en translation au levier de passage (ou d'engagement) (de rapport) LP et immobilisée en rotation par le carter de boîte de vitesses. Le levier de passage LP est translatable suivant la flèche FD1 (voir figure 4) par l'intermédiaire du levier de sélection LS, et est entraîné en rotation lors de l'engagement d'un rapport (ou d'une vitesse).

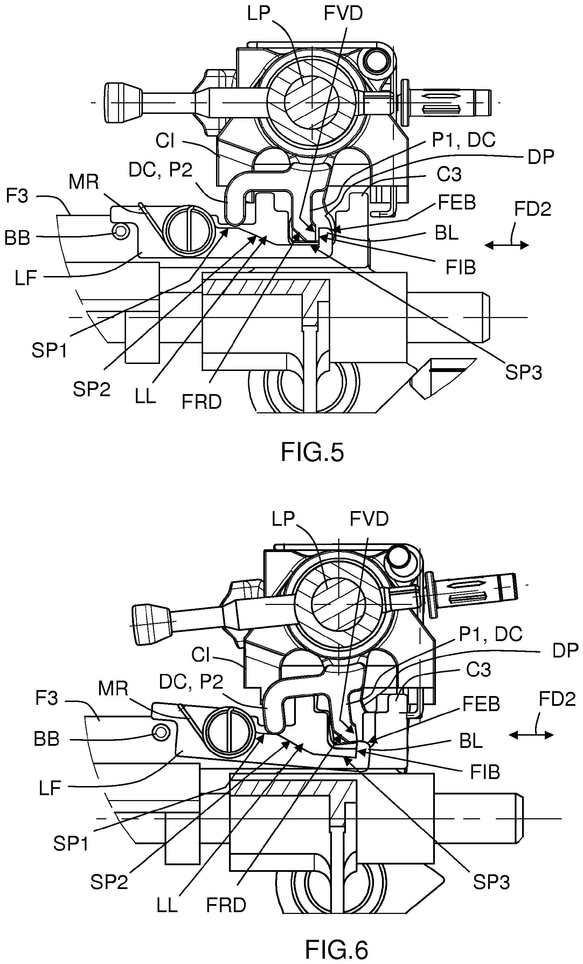

La clé d'interverrouillage CI est chargée d'agir sur les crosses Cj afin de bloquer la translation des fourchettes non sélectionnées Fj. Elle comprend sur une face inférieure deux nervures espacées l'une de l'autre d'une distance choisie de manière à permettre le logement d'une extrémité supérieure saillante de la crosse Cj d'une fourchette Fj. Lorsqu'une fourchette Fj est dans sa position de repos (illustrée sur les figures 4 et 5) l'extrémité supérieure de sa crosse Cj est sensiblement au contact de la nervure la plus à droite et donc cette crosse Cj peut être translatée vers la droite pour gagner sa position active (illustrée sur la figure 6) lors de l'entraînement en rotation dans le sens antihoraire du levier de passage LP. Lorsqu'une fourchette Fj est dans sa position active (illustrée sur la figure 6) sa crosse Cj peut être translatée vers la gauche lors de la rotation du levier de passage LP dans le sens horaire pour regagner sa position de repos (illustrée sur les figures 4 et 5).

L'ensemble de freinage est chargé d'agir lorsque le levier de passage LP induit la translation de la troisième fourchette F3, associée à au moins un rapport de marche avant. Plus précisément, chaque fois que la dernière situation survient, l'ensemble de freinage induit une friction du synchroniseur du pignon fou, qui est associé au rapport de marche avant associé à la fourchette Fj translatée, afin d'agir sur la vitesse des pignons de marche arrière (et plus précisément les freiner) pour permettre l'engagement de la marche arrière par action du doigt de passage DP sur l'actionneur (ou basculeur) de marche arrière AMR.

Dans ce qui suit, on considère à titre d'exemple non limitatif que c'est la translation de la troisième fourchette F3 (ici associée aux cinquième et sixième rapports) qui provoque l'intervention de l'ensemble de freinage. Mais il pourrait s'agir d'une autre fourchette dans la mesure où l'architecture interne de la commande le permet.

Selon l'invention, et comme illustré sur les figures 4 à 8, la boîte de vitesses BV comprend également un mécanisme de commande interne comportant un loquet LF et un doigt de commande DC destinés à interagir dans la phase de sélection de la marche arrière pour provoquer un freinage du pignon de marche arrière de l'arbre secondaire AS par le synchroniseur qui est associé à l'ensemble de freinage et (ici) à la troisième fourchette F3.

Comme illustré sur les figures 4 à 8, le loquet LF est monté à rotation sur l'une des fourchettes Fj et plus précisément celle qui est chargée de provoquer l'intervention de l'ensemble de freinage. Il est donc ici monté à rotation sur une face latérale de la troisième fourchette F3.

Ce loquet LF est muni d'un logement LL qui est terminé par une butée BL.

Le doigt de commande DC est situé dans la clé d'interverrouillage CI et solidarisé fixement au levier de passage LP. Par exemple, il peut faire partie d'une pièce comprenant déjà le doigt de passage DP (dit « multifonction »), qui est chargé du passage des vitesses. Mais dans une variante il peut faire partie d'une pièce qui est différente de celle comprenant le doigt de passage DP.

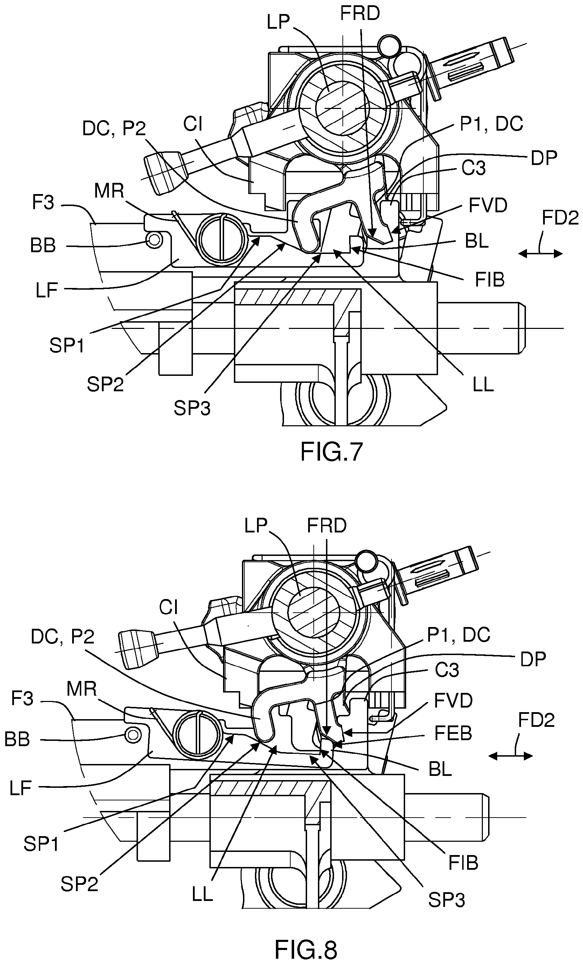

Ce doigt de commande DC est propre, lorsqu'il est translaté avec son levier de passage LP suivant la flèche FD1 (illustrée sur la figure 3) pendant une phase de sélection de la marche arrière, à agir sur le loquet LF pour translater sa fourchette (ici F3) entre une position de repos (illustrée sur les figures 4 et 5) et une position active (illustrée sur la figure 6). Cette position active est destinée à contraindre le synchroniseur qui est associé à la fourchette F3 à freiner le pignon de marche arrière de l'arbre secondaire AS jusqu'à ce que le doigt de commande DC ait cessé d'agir sur le loquet LF (voir figure 7) pour permettre un retour de la fourchette F3 vers sa position de repos (et ici d'abord vers une position intermédiaire), puis un engagement effectif de la marche arrière.

Pour ce faire, le doigt de commande DC comprend des première P1 et seconde P2 parties qui sont agencées de manière à être logées dans le logement LL du loquet LF lorsqu'il (DC) est translaté par le levier de passage LP pendant une phase de sélection de la marche arrière.

La première partie P1 du doigt de commande DC est agencée pour pousser la butée BL (ici vers la droite) lorsque son doigt de commande DC est entraîné en rotation par le levier de passage LP pendant la phase de sélection de la marche arrière (après son placement dans le logement LL). Cette poussée exercée sur la butée BL est destinée à translater la troisième fourchette F3 entre sa position de repos et sa position active (destinée à faire fonctionner l'ensemble de freinage).

La seconde partie P2 du doigt de commande DC est destinée à entraîner en rotation le loquet LF par appui sur une face interne du logement LL, en même temps que la première partie P1 translate la troisième fourchette F3 en poussant sur la butée BL. Cet entraînement en rotation est destiné à dégager la première partie P1 de la butée BL une fois que la troisième fourchette F3 est parvenue dans sa position active (propre à agir sur le synchroniseur associé), pour permettre un retour de cette troisième fourchette F3 vers sa position de repos en vue de l'engagement effectif de la marche arrière par le doigt de passage DP.

Afin, notamment, de permettre l'intégration du doigt de commande DC dans une boîte de vitesses compacte, il est particulièrement avantageux qu'avant d'être entraînée en rotation sa première partie P1 soit sensiblement perpendiculaire à la direction de translation de la troisième fourchette F3 (FD2), comme c'est le cas dans l'exemple de réalisation non limitatif illustré sur les figures 4 et 5.

Par ailleurs, il est également avantageux que la seconde partie P2 du doigt de commande DC comprenne une première sous-partie solidarisée sensiblement perpendiculairement à la première partie P1 et une seconde sous-partie solidarisée sensiblement perpendiculairement à cette première sous-partie.

On comprendra que lorsque la clé d'interverrouillage CI est translatée par le levier de passage LP vers la fourchette F3 (suivant la flèche FD1), le doigt de commande DC parvient dans le logement LL du loquet LF. Puis, lorsque le levier de passage LP est entraîné en rotation lors de la sélection de la marche arrière, cela induit l'entraînement en rotation du doigt de commande DC. La première partie P1 de ce dernier (DC) va alors appuyer sur la face interne du logement LL du loquet LF en provoquant l'entraînement en rotation (ou basculement) de ce dernier (LF) et donc un abaissement du niveau de sa butée BL. Dans le même temps, la seconde partie P2 du doigt de commande DC pousse la butée BL vers la droite, et donc induit la translation vers la droite de la troisième fourchette F3 jusqu'à sa position active. L'entraînement en rotation du levier de passage LP se poursuivant, il arrive un moment où la butée BL se retrouve placée sous le niveau de la première partie P1 (voir figure 6). La troisième fourchette F3 peut alors revenir vers une position intermédiaire dans laquelle elle n'agit plus sur le synchroniseur associé, et donc le doigt de passage DP qui continue d'être entraîné en rotation par le levier de passage LP peut agir sur l'actionneur de marche arrière AMR pour provoquer l'engagement de la marche arrière.

On notera que ce retour vers la position intermédiaire peut résulter soit du fait que la troisième fourchette F3 est montée à translation sous une force de rappel (par exemple produite par un ressort ou une lame), soit du fait d'une nouvelle action du doigt de commande DC sur le loquet LF, comme c'est le cas dans l'exemple illustré non limitativement sur les figures 4 à 8.

Cette seconde hypothèse nécessite, comme illustré, que le logement LL du loquet LF soit délimité par une paroi comportant une première sous-partie SP1 sensiblement plane (ici située à gauche), une deuxième sous-partie SP2 inclinée, prolongeant la première sous-partie SP1 et propre à permettre un entraînement en rotation progressif et contrôlé du loquet LF par la seconde partie P2 du doigt de commande DC, et une troisième sous-partie SP3 sensiblement plane, prolongeant la deuxième sous-partie SP2 et se terminant au niveau de la butée BL. La longueur de la troisième sous-partie SP3 est choisie en fonction de la distance séparant la première partie P1 du doigt de commande DC de la seconde sous-partie de la seconde partie P2 du doigt de commande DC. Cette troisième sous-partie SP3 ne sert a priori pas de zone d'appui pour la seconde partie P2 du doigt de commande DC.

Dans ce cas, la seconde sous-partie de la seconde partie P2 du doigt de commande DC s'étend sur une hauteur qui est plus petite que celle de la première partie P1 de ce dernier (DC) afin de tenir compte de l'écart entre les première SP1 et troisième SP3 sous-parties sensiblement planes de la paroi délimitant le logement LL du loquet LF.

Comme illustré non limitativement sur les figures 4 à 8, ce mode de réalisation du loquet LF peut être avantageusement combiné à des moyens de rappel élastique MR couplés au loquet LF et à la troisième fourchette F3 et agencés pour replacer automatiquement le loquet LF dans une position d'attente (redressée) lorsque le doigt de commande DC n'agit plus sur lui LF. On notera qu'en présence de tels moyens de rappel élastique MR il est préférable, comme illustré, que la troisième fourchette F3 comprenne une protubérance BB définissant une butée destinée à bloquer la rotation du loquet LF lorsqu'il atteint sa position de repos (ou d'attente) illustrée sur les figures 4, 5 et 7.

Dans ce cas, lorsque le doigt de commande DC est entraînée en rotation, sa seconde partie P2 appuie sur la première sous-partie SP1 sensiblement plane ce qui fait basculer le loquet LF et dans le même temps sa première partie P1 pousse la butée BL du loquet LF, ce qui translate vers la droite la troisième fourchette F3. Puis, une fois que la butée BL se retrouve placée sous le niveau de la première partie P1, la poursuite de l'entraînement en rotation du doigt de commande DC provoque l'appui de la seconde partie P2 de ce dernier (DC) sur la deuxième sous-partie SP2 inclinée. Il en résulte une translation progressive et contrôlée du loquet LF, et donc de sa troisième fourchette F3, vers la gauche et donc vers la position intermédiaire de cette dernière (F3). A ce stade le sens de rotation du levier de passage LP est inversé car la marche arrière a été effectivement engagée par l'action du doigt de passage DP. Par conséquent, la seconde partie P2 du doigt de commande DC va de nouveau s'appuyer sur la deuxième sous-partie SP2 inclinée, ce qui provoque un nouveau basculement progressif et contrôlé du loquet LF destiné à permettre l'abaissement de la butée sous le niveau de la première partie P1 du doigt de commande DC. La poursuite de l'entraînement en rotation du doigt de commande DC permet alors de replacer la première partie P1 du doigt de commande DC dans le logement LL du loquet LF (en amont de la butée BL), et l'appui de la seconde partie P2 du doigt de commande DC sur la deuxième sous-partie SP2 inclinée, et donc la translation progressive et contrôlée du loquet LF, et donc de sa troisième fourchette F3, vers la gauche et donc vers la position de repos de cette dernière (F3). Lorsque l'entraînement en rotation du doigt de commande DC prend fin, la seconde partie P2 du doigt de commande DC se retrouve sur la première sous-partie SP1.

Afin d'aider la seconde partie P2 du doigt de commande DC à agir sur le loquet LF (pour l'entraîner en rotation et pour le translater avec sa troisième fourchette F3), la première partie P1 du doigt de commande DC peut avantageusement comprendre une face avant FVD propre à pousser une face interne FIB de la butée BL, et une face arrière FRD chanfreinée et propre à agir sur une face externe FEB de la butée BL. La face avant FVD peut être initialement sensiblement parallèle à la face interne FIB de la butée BL afin de la pousser de façon optimale. La face arrière FRD est chanfreinée afin d'appuyer sur la butée BL de façon continue pour participer au basculement de son loquet LF en vue de permettre à sa première partie P1 de passer au-dessus de cette butée BL, lors de l'inversion de la rotation du doigt de commande DC consécutivement à l'engagement effectif de la marche arrière.

Par exemple, l'inclinaison de la face arrière FRD par rapport à la direction de translation FD2 peut être initialement comprise entre environ 30° et environ 60°.

On notera également que pour diminuer les frottements entre la première partie P1 du doigt de commande DC et la butée BL du loquet LF, et donc améliorer l'agrément du conducteur, il est préférable qu'au moins la portion avant de la première partie P1 (qui est destinée à accoster (ou pousser) la butée BL) soit munie d'un galet (ou d'un élément analogue).

Le mécanisme de commande interne (loquet/doigt de commande) décrit ci-avant présente plusieurs avantages. En effet, il est peu encombrant et peu couteux et peut s'adapter sur de nombreux types de commande interne de boîte de vitesses couramment utilisés. En outre, il permet d'améliorer la fonction de freinage de marche arrière grâce à la précision offerte par l'ajustement aisé du point d'escamotage du doigt de commande par rapport à la butée du loquet. De plus, il permet d'appliquer durablement des efforts importants sur l'actionneur (ou basculeur) de marche arrière.

## Revendications

1. Boîte de vitesses (BV) manuelle, destinée à équiper un véhicule et comprenant des arbres primaire (AP) et secondaire (AS) munis de pignons définissant des rapports, des fourchettes (Fj) munies d'une crosse (Cj) et propres à être translatées pour actionner des synchroniseurs à friction associés à certains desdits pignons, un levier de passage (LP) muni d'une clé d'interverrouillage (CI) comportant un doigt de passage (DP) propre à agir sur lesdites crosses (Cj) pour provoquer une translation sélective de l'une desdites fourchettes (Fj), et un ensemble de freinage propre, en cas de translation d'une fourchette (F3) d'un rapport de marche avant, à induire une friction du synchroniseur associé à ce dernier rapport pour agir sur la vitesse de pignons de marche arrière, l'une desdites fourchettes (Fj) comprenant un loquet (LF) monté à rotation, **caractérisée en ce que** ledit loquet (LF) est muni d'un logement (LL) terminé par une butée (BL), et **en ce que** ledit levier de passage (LP) comprend également, dans ladite clé d'interverrouillage (CI), un doigt de commande (DC) comprenant des première (P1) et seconde (P2) parties et propre à être logé dans ledit logement (LL) lorsque ledit doigt de commande (DC) est translaté pendant une phase de sélection d'une marche arrière, puis, lorsqu'il est entraîné en rotation, à pousser ladite butée (BL) avec sa première partie (P1) pour translater sa fourchette (F3) entre une position de repos et une position active propre à faire fonctionner ledit ensemble de freinage, tout en entraînant en rotation ledit loquet (LF), par appui de ladite seconde partie (P2) sur une face interne dudit logement (LL), pour dégager sa première partie (P1) de ladite butée (BL) afin de permettre un retour de sa fourchette (F3) vers sa position de repos en vue d'un engagement effectif de la marche arrière par ledit doigt de passage (DP).

2. Boîte de vitesses selon la revendication 1, **caractérisée en ce qu'**avant d'être entraînée en rotation ladite première partie (P1) du doigt de commande (DC) est placée sensiblement perpendiculairement à la direction de translation de la fourchette (F3) comportant ledit loquet (LF).

3. Boîte de vitesses selon l'une des revendications 1 et 2, **caractérisée en ce que** ladite première partie (P1) du doigt de commande (DC) comprend une face avant (FVD) propre à pousser une face interne (FIB) de ladite butée, et une face arrière (FRD) chanfreinée et propre à agir sur une face externe (FEB) de ladite butée (BL) pour provoquer une translation de sa fourchette (F3) entre une position intermédiaire et sa position de repos consécutivement audit engagement effectif de la marche arrière par ledit doigt de passage (DP).

4. Boîte de vitesses selon l'une des revendications 1 à 3, **caractérisée en ce que** ledit logement (LL) est délimité par une paroi comportant une première sous-partie (SP1) sensiblement plane, une deuxième sous-partie (SP2) inclinée, prolongeant ladite première sous-partie (SP1) et propre à permettre un entraînement en rotation progressif et contrôlé dudit loquet (LF) par ladite seconde partie (P2) du doigt de commande (DC), et une troisième sous-partie (SP3) sensiblement plane, prolongeant ladite deuxième sous-partie (SP2) et se terminant au niveau de ladite butée (BL).

5. Boîte de vitesses selon l'une des revendications 1 à 4, **caractérisée en ce que** ladite seconde partie (P2) du doigt de commande (DC) comprend une première sous-partie solidarisée sensiblement perpendiculairement à ladite première partie (P1) et une seconde sous-partie solidarisée sensiblement perpendiculairement à cette première sous-partie.

6. Boîte de vitesses selon l'une des revendications 1 à 5, **caractérisée en ce qu'**elle comprend des moyens de rappel élastique (MR) couplés audit loquet (LF) et à ladite fourchette (F3) comprenant ledit loquet (LF) et agencés pour replacer automatiquement ce dernier (LF) dans une position d'attente lorsque ledit doigt de commande (DC) n'agit plus sur lui (LF).

7. Boîte de vitesses selon l'une des revendications 1 à 6, **caractérisée en ce que** ledit loquet (LF) est monté à rotation sur une fourchette (F3) associée à des cinquième et sixième rapports.

8. Boîte de vitesses selon l'une des revendications 1 à 7, **caractérisée en ce que** ledit doigt de commande (DC) fait partie intégrante d'une pièce comprenant ledit doigt de passage (DP).

9. Véhicule, **caractérisé en ce qu'**il comprend une boîte de vitesse manuelle (BV) selon l'une des revendications précédentes.

10. Véhicule selon la revendication 9, **caractérisé en ce qu'**il est de type automobile.

## Patentansprüche

1. Handschaltgetriebe (BV), das dazu bestimmt ist, ein Fahrzeug auszustatten, und Primär- (AP) und Sekundärwellen (AS) umfassend, die mit Ritzeln versehen sind, welche Gänge definieren, Schaltgabeln (Fj), die mit einer Klinke (Cj) versehen sind, und sich eignen, verschoben zu werden, um Reibsynchronisiereinrichtungen zu betätigen, die einigen der besagten Ritzel zugeordnet sind, einen Schalthebel (LP), der mit einem Verriegelungsschlüssel (CI) versehen ist, der einen Schaltfinger (DP) umfasst, der sich eignet, auf die Klinken (Cj) einzuwirken, um für eine selektive Translation der einen der besagten Klauen (Fj) zu sorgen, und eine Bremseinheit, die sich im Falle einer Translation einer Klaue (F3) eines Vorwärtsganges, eignet, eine Reibung der zugehörigen Synchronisiereinrichtung auf diesen letzten Gang zu induzieren, um auf die Ritzelgeschwindigkeit des Rückwärtsganges einzuwirken, wobei die eine der besagten Klauen (Fj) einen Schieber (LF) umfasst, der drehend montiert ist, **dadurch gekennzeichnet, dass** der besagte Schieber (LF) mit einem Sitz (LL) versehen ist, die durch einen Anschlag (BL) abgeschlossen wird, und dadurch, dass der besagte Schalthebel (LP) ebenfalls im besagten Verriegelungsschlüssel (CI) einen Steuerfinger (DC) umfasst, der einen ersten (P1) und zweiten (P2) Abschnitt umfasst, und sich eignet, in dem besagten Sitz (LL) aufgenommen zu werden, wenn der besagte Steuerfinger (DC) während einer Auswahlphase eines Rückwärtsganges verschoben wird, danach, wenn er in Drehung versetzt wird, den besagten Anschlag (BL) mit seinem ersten Abschnitt (P1) anzuschieben, um die Klaue (F3) zwischen einer Ruheposition und einer aktiven Position zu verschieben, die sich eignet, die besagte Bremseinheit zu betreiben, und dabei den besagten (LF) Schieber durch Drücken auf den besagten zweiten Abschnitt (P2) auf eine Innenfläche des besagten Sitzes (LL) in Drehung versetzt, und dabei seinen ersten Abschnitt (P1) aus dem besagten Anschlag (BL) freigibt, um eine Rückwärtsbewegung der Klaue (F3) in ihre Ruheposition in Hinsicht darauf zu ermöglichen, dass der Rückwärtsgang durch den besagten Schaltfinger (DP) tatsächlich eingelegt wird.

2. Schaltgetriebe nach Anspruch 1, **dadurch gekennzeichnet, dass** der besagte erste Abschnitt (P1) des Steuerfingers (DC), bevor er in Drehung versetzt wird, in etwa senkrecht zur Translationsrichtung der Klaue (F3) den besagten Schieber (LF) umfassend, platziert wird.

3. Schaltgetriebe nach einem der Ansprüche 1 und 2, **dadurch gekennzeichnet, dass** der besagte erste Abschnitt (P1) des Steuerfingers (DC) eine Vorderseite (FVD) umfasst, die sich eignet, eine Innenseite (FIB) des besagten Anschlags anzuschieben, und eine Rückseite (FRD), die gefast ist und sich eignet, auf eine Außenseite (FEB) des besagten Anschlags (BL) einzuwirken, um für eine Translation seiner Klaue (F3) zwischen einer Zwischenposition und seiner Ruheposition im Anschluss an das besagte tatsächliche Einlegen des Rückwärtsgangs durch den besagten Schaltfinger (DP) zu sorgen.

4. Schaltgetriebe nach einem der Ansprüche 1 bis 3, **dadurch gekennzeichnet, dass** den besagten Sitz (LL) durch eine Wand eingegrenzt wird, die einen ersten in etwa ebenen Unterabschnitt (SP1) umfasst, einen zweiten geneigten Unterabschnitt (SP2), in Verlängerung des besagten ersten Unterabschnitts (SP1) und sich eignet, um den Steuerfinger (DC) progressiv und durch den Schieber (LF) durch den besagten zweiten Abschnitt (P2) gesteuert in Drehung zu versetzen, und einen dritten in etwa ebenen Unterabschnitt (SP3), in Verlängerung des besagten zweiten Unterabschnitts (SP2) und der im Bereich des besagten Anschlags (BL) endet.

5. Schaltgetriebe nach einem der Ansprüche 1 bis 4, **dadurch gekennzeichnet, dass** der besagte zweite Abschnitt (P2) des Steuerfingers (DC) einen ersten Unterabschnitt umfasst, der in etwa senkrecht zum besagten ersten Abschnitt (P1) befestigt ist, und einen zweiten Unterabschnitt, der in etwa senkrecht zu diesem ersten Unterabschnitt befestigt ist.

6. Schaltgetriebe nach einem der Ansprüche 1 bis 5, **dadurch gekennzeichnet, dass** sie elastische Rückholvorrichtung (MR) umfasst, die mit dem besagten Schieber (LF) und mit der besagten Klaue (F3), den besagten Schieber (LF) umfassend, gekoppelt sind, und angeordnet sind, um diesen letzteren (LF) automatisch wieder in eine Warteposition zu platzieren, wenn der besagte Steuerfinger (DC) nicht mehr auf ihn (LF) einwirkt.

7. Schaltgetriebe nach einem der Ansprüche 1 bis 6, **dadurch gekennzeichnet, dass** der besagte Schieber (LF) drehend auf einer Klaue (F3) montiert ist, die dem fünften und sechsten Gang zugeordnet ist.

8. Schaltgetriebe nach einem der Ansprüche 1 bis 7, **dadurch gekennzeichnet, dass** der besagte Steuerfinger (DC) vollständiger Bestandteil eines Teils ist, das den besagten Schaltfinger (DP) umfasst.

9. Fahrzeug, **dadurch gekennzeichnet, dass** es ein Handschaltgetriebe (BV) nach einem der vorhergehenden Ansprüche umfasst.

10. Fahrzeug nach Anspruch 9, **dadurch gekennzeichnet, dass** es der Typ eines Kraftfahrzeugs ist.

## Claims

1. Manual gearbox (BV), intended to equip a vehicle and comprising primary (AP) and secondary (AS) shafts provided with pinions defining ratios, forks (Fj) provided with a tie bar (Cj) and able to be translated so as to actuate friction synchronisers associated with some of said pinions, a passage lever (LP) provided with an interlocking key (CI) comprising a passage finger (DP) able to act on said tie bars (Cj) in order to cause a selective translation of one of said forks (Fj), and a braking assembly able, in the case of translation of a fork (F3) of a forward ratio, to cause a friction of the synchroniser associated with the latter ratio in order to act on the speed of reverse pinions, one of said forks (Fj) comprising a latch (LF) mounted for rotation, **characterised in that** said latch (LF) is provided with a housing (LL) terminating in a stop (BL), and **in that** said passage lever (LP) also comprises, in said interlocking key (CI), a control finger (DC) comprising first (P1) and second (P2) parts and able to be housed in said housing (LL) when said control finger (DC) is translated during a phase of selection of a reverse gear, and then, when it is rotated, to push said stop (BL) with its first part (P1) in order to translate its fork (F3) between an idle position and an active position able to make said braking assembly function, while rotating said latch (LF), by the pressing of said second part (P2) on an internal face of said housing (LL), in order to release its first part (P1) from said stop (BL) in order to allow a return of its fork (F3) to its idle position with a view to an effective engagement of reverse gear by said passage finger (DP).

2. Gearbox according to claim 1, **characterised in that**, before being rotated, said first part (P1) of the control finger (DC) is place substantially perpendicular to the direction of translation of the fork (F3) comprising said latch (LF).

3. Gearbox according to any of claims 1 and 2, **characterised in that** said first part (P1) of the control finger (DC) comprises a front face (FVD) able to push an internal face (FIB) of said stop, and a bevelled rear face (FRD) able to act on an external face (FEB) of said stop (BL) in order to cause a translation of its fork (F3) between an intermediate position and its idle position following said effective engagement of reverse gear by said passage finger (DP).

4. Gearbox according to any of claims 1 to 3, **characterised in that** said housing (LL) is delimited by a wall comprising a first substantially planar subpart (SP1), a second inclined subpart (SP2), extending said first subpart (SP1) and able to allow a gradual and controlled rotation of said latch (LF) by said second part (P2) of the control finger (DC), and a third substantially planar subpart (SP3), extending said second subpart (SP2) and terminating at said stop (BL).

5. Gearbox according to any of claims 1 to 4, **characterised in that** said second part (P2) of the control finger (DC) comprises a first subpart secured substantially perpendicular to said first part (P1) and a second subpart secured substantially perpendicular to this first subpart.

6. Gearbox according to any of claims 1 to 5, **characterised in that** it comprises elastic return means (MR) coupled to said latch (LF) and to said fork (F3) comprising said latch (LF) and arranged so as to automatically place the latter (LF) in a waiting position again when said control finger (DC) no longer acts on it (LF).

7. Gearbox according to any of claims 1 to 6, **characterised in that** said latch (LF) is mounted for rotation on a fork (F3) associated with fifth and sixth ratios.

8. Gearbox according to any of claims 1 to 7, **characterised in that** said control finger (DC) forms an integral part of a piece comprising said passage finger (DP).

9. Vehicle, **characterised in that** it comprises a manual gearbox (BV) according to any of the preceding claims.

10. Vehicle according to claim 9, **characterised in that** it is of the automobile type.
